# EUROPÄISCHE PATENTSCHRIFT

(11) **EP 3 610 188 B1**
(45) Veröffentlichungstag und Bekanntmachung des Hinweises auf die Patenterteilung: **16.03.2022**
(21) Anmeldenummer: 18736784.2
(22) Anmeldetag: 11.04.2018
(51) Int. Cl.: F16L 55/40, B29C 35/10

(54) **VORRICHTUNG ZUM SANIEREN EINER ROHRLEITUNG MITTELS EINER KUNSTSTOFF-AUSKLEIDUNG**
DEVICE FOR REHABILITATING A PIPELINE BY MEANS OF A PLASTIC LINING
DISPOSITIF POUR RÉNOVER UNE CONDUITE AU MOYEN D'UN REVÊTEMENT EN MATIÈRE PLASTIQUE

(30) Priorität: 12.04.2017 DE 102017107977
(43) Veröffentlichungstag der Anmeldung: 19.02.2020
(73) Patentinhaber: Krasowski, Bernd-Jan, 01936 Laußnitz (DE)
(72) Erfinder: Krasowski, Bernd-Jan, 01936 Laußnitz (DE)
(74) Vertreter: Drechsler, Gottfried
(86) Internationale Anmeldenummer: PCT/DE2018/100337
(87) Internationale Veröffentlichungsnummer: WO 2018/188698

(56) Entgegenhaltungen:
- EP-A1- 1 959 183
- EP-A1- 2 916 061
- DE-A1-102010 013 286

## Beschreibung

Die Erfindung betrifft eine Vorrichtung zum Sanieren einer Rohrleitung mittels einer Kunststoffauskleidung, die mit einem Reaktionsharz getränkt ist, welches unter dem Einfluss der Strahlung lichtemittierender Bauelemente aushärtet.

Im Sanierungsprozess wird ein mehrlagiges, schlauchförmiges Gebilde, ein sogenannter Inliner, dessen mindestens eine Lage mit einem strahlungshärtbaren Harz getränkt ist, ungehärtet in den zu sanierenden Rohrabschnitt eingeführt und in diesem mittels Druckluft flächig gegen die Rohrleitung gepresst. Mit Hilfe einer verfahrbaren, energiereichen Strahlungsquelle, deren Geschwindigkeit auf die Strahlungsintensität der Lichtquelle abgestimmt wird, härtet danach das auf die Wellenlänge der Strahlungsquelle eingestellte Harz aus. Die Strahlungsquelle kann Infrarotlicht IR-Licht, sichtbares Licht oder UV-Licht emittieren und besteht vorzugsweise aus mehreren Bauelementen oder -gruppen.

Aus der DE 42 05 113 C1 ist eine Strahlungsquelle für die Bestrahlung von Innenwänden langgestreckter Hohlräume mit einem Fahrgestell bekannt, dessen zentraler Träger mit mehreren umfänglich verteilten UV-Lampen bestückt ist. Diese Art von UV-Lampen bedürfen keiner Kühlung.

In der DE 198 17 413 C2 werden ein Verfahren und eine Vorrichtung zum Sanieren von Rohrleitungen unter Einführen eines mit einem UV-härtbaren Harz getränkten Faserschlauchs beschrieben, wobei die Durchziehgeschwindigkeit einer UV-Lampenanordnung in Abhängigkeit von der durch die exotherme Härtungsreaktion erzeugte Temperatur an der inneren Schlauchoberfläche automatisch gesteuert wird.

Aus der WO 2005/103121 A1 sind UV-Licht emittierende Leuchtdioden bekannt.

Die DE 10 2007 052 915 A1 zeigt eine Vorrichtung zum Aushärten von Kunststofflinern zur Kanalsanierung mit wenigstens einer UV-Lichtquelle auf, bei der Rollen zur Lagerung der Vorrichtung im Rohr und endseitig je eine Videokamera vorgesehen sind. Umfänglich verteilte IR-Temperatursensoren erfassen die exotherme Polymerisation, die bei der Aushärtung abläuft. Somit wird verhindert, dass zu hohe Temperaturen beim Härten entstehen, die den Auskleidungsvorgang völlig schädigen können.

Die DE 101 22 566 B4 sieht für die Rohrsanierung mit einem Faserschlauch von mehr als 10 mm Wandstärke, der mit einem härtbaren Harz getränkt ist, welches einen UV-Initiator und ein organisches Peroxid enthält, eine Intensität der Lichtquelle von mindestens 800 Watt/m² vor, wobei die zwei hintereinander angeordneten UV-Lampen von jeweils mindestens 400 W/m² Leistung erbringen.

Gemäß der EP 1 959 183 A1 und EP 2 129 956 B1 sind zur Rohrsanierung mittels einer Vorrichtung eine Mehrzahl von ebenen oder gebogenen Wandflächenelementen mit darauf angeordneten lichtemittierenden Hochleistungsleuchtdioden vorgesehen, deren großformatige Kühlkörper zur Mitte der Vorrichtung hin einen Kanal aussparen, welcher von einem Kühlfluid mittels einer Pumpe oder eines Gebläses durchströmt wird. Die ring- oder vieleckförmig angeordneten Wandflächenelemente können durch Wülste oder eine zusätzliche transparente Außenhülle vor mechanischen Beeinträchtigungen geschützt sein. An der Stirnseite der aus mehreren Gliedern bestehenden Vorrichtung ist eine Videokamera angeordnet.

Aus der DE 10 2007 038 197 A1 ist weiterhin ein Verfahren und eine Vorrichtung zum Sanieren von Rohrleitungen durch Einführen eines Faserschlauchs, der mit einem lichthärtbaren Reaktionsharz getränkt ist, bekannt, bei dem die Leuchtdioden auf einem rohrförmigen oder spiralförmigen Träger in mehreren parallelen ringförmigen oder wendelförmigen Bereichen angeordnet sind, wobei die Leuchtdioden auf den jeweils benachbarten Bereichen horizontal oder umfänglich gegeneinander versetzt sind. Eine Kühlvorrichtung ist nicht offenbart.

DE 102010013286 A1 offenbart eine Beleuchtungsvorrichtung für die Kanalsanierung umfassend eine Mehrzahl von ebenen Chip-on-Board-LED-Modulen.

Der Erfindung liegt die Aufgabe zugrunde, eine Vorrichtung zum Sanieren einer Rohrleitung mittels eines Auskleide-Faserschlauchs zu schaffen, der mit einem Reaktionsharz getränkt ist, welches unter dem Einfluss der Strahlung lichtemittierender Bauelemente aushärtet, wobei die Vorrichtung bei Erhöhung einer temperaturgeregelten Passiergeschwindigkeit im Faserschlauch und Verzicht auf das Verbauen kostentreibender metallischer Kühlkörper, Zuführungen und Verbauen von Kühlflüssigkeitsleitungen, Pumpen oder Gebläsen mit lichtemittierenden Hochleistungsdioden als ein in sich geschlossenes, Flüssigkeits-gekühltes System ausgestattet ist.

Die Aufgabe wird erfindungsgemäß gelöst indem die Vorrichtung ein Kopfteil aus einem transparenten, temperaturbeständigen Material besitzt, dass Endkappen an beiden Stirnseiten die Vorrichtung nach außen hermetisch abdichten, wobei die gesamte Vorrichtung oder zumindest ihr Kopfteil mit einer transparenten, schwer entflammbaren Isolierflüssigkeit gefüllt ist, und wobei die Vorrichtung einen Einsatz enthält, dessen Isolierstoffträger mit Hochleistungs-Leuchtdioden bestückt sind.

Erfindungsgemäß ist der Einsatz in Längsachse der Vorrichtung rotationssymmetrisch ausgebildet und motorisch über eine Welle oder Hydraulikleitung antreibbar.

Nach einer bevorzugten Variante weist der Einsatz radial, sternförmig oder bauchig abstehende und mit Leiterzügen versehene Isolierstoffträger auf, die im Bereich des Kopfteils mit Hochleistungs-Leuchtdioden bestückt sind.

Nach einer weiteren anderen Ausbildungsart trägt der Einsatz ein oder mehrere Flügel oder Bögen aus beidseitig bestückten Isolierstoffträgern.

Bevorzugt trägt der Einsatz einen Stern aus drei bis sechs, vorzugweise vier, beidseitig bestückten Isolierstoffträgern 5.

In weiterer Ausgestaltung der Erfindung weist ein im ebenen Zustand einseitig bestückter Isolierstoffträger Faltzonen auf und formt im montierten Zustand ein radial abstehendes, sternförmiges Gebilde mit äußerlich angeordneten Hochleistungs-Leuchtdioden aus.

Der Einsatz wird nach einer bevorzugten Ausbildung über eine Welle durch einen regelbaren E-Motor angetrieben, welcher in einer der Endkappen angeordnet ist, wobei der Einsatz dann mit einer bestimmten Drehzahl rotiert. Der Einsatz kann aber auch antriebslos oder feststehend ausgebildet sein.

In Fortbildung der Erfindung ist in und/oder an mindestens einer Endkappe eine schwenkbare Videokamera angeordnet. Sind in und an der Endkappe je eine Videokamera angeordnet ist eine bessere Überwachung möglich, da gleichzeitig zwei Ansichten vergleichbar sind. Außerdem sind vorteilhaft in beiden Endkappen Sensoren vorgesehen, welche mindestens die Reaktionstemperatur am oder im Faserschlauch, die Lufttemperatur im Rohr, die Temperatur der Isolierflüssigkeit und die Druckluft im Rohr währen des Härtevorgangs erfassen und an eine externen zentrale Steuerung/Regelung melden.

Die hintere Endkappe weist in weiterer Ausgestaltung einen kombiniert mechanisch-elektrischen Anschluss zu einem flexiblen Kabel oder Schiebekabel auf, über welchen ein vorhandener E-Motor, die Videokamera, die lichtemittierenden Hochleistungsdioden und die Sensoren beaufschlagt werden, wobei die Zuleitungen zu der stirnseitigen Endkappe durch die hohle Welle hindurchgeführt sind. Es kann aber auch ein hydraulisch-elektrischer Anschluss ausgebildet sein, welcher eine Schiebehydraulikleitung aufweist, wobei die Zuleitungen durch die hohle Welle oder die Hydraulikleitung oder entlang der Welle oder Hydraulikleitung geführt sind.

Nach einer weiteren Variante ist neben dem Kopfteil der Vorrichtung nur eine der Endkappen mit Isolierflüssigkeit gefüllt.

Als Isolierflüssigkeit eignet sich sowohl ein Mineralöl als auch ein organischer Ester.

Die Hochleistungs-Leuchtdioden sind in ihrer Wellenlänge auf das jeweils verwendete Reaktionsharz im Faserschlauch abgestimmt. Sie können aber auch über ihre Erstreckung in unterschiedlichen Wellenlängen und/oder unterschiedlichen Lichtstärken strahlend angeordnet sein. Ihre Montage kann beispielsweise durch direktes Drahtbonden und Vergießen der Chips, als SMD-Bauelemente oder in Drahtbein-Löttechnik auf Isolierstoffträgern erfolgen.

Das Kopfteil hat in vorteilhafter Weise einen rotationssymmetrischen zylindrischen oder vieleckigen oder bauchigen Querschnitt.

In Fortbildung der Erfindung sind mit dem Kopfteil ein oder mehrere nach geordnete Flüssigkeitsspeicher zum Umpumpen der Isolierflüssigkeit verbunden.

Der Einsatz selbst kann schraubenförmig ausgebildet und allein durch die Isolierflüssigkeit angetrieben sein.

Mit der Erfindung werden verschiedene Vorteile gegenüber dem Stand der Technik erreicht, insbesondere durch das Anordnung der Komponenten in einer gesonderten Isolierflüssigkeit eine hohe elektrische Belastbarkeit, ein hoher elektrischer Isolierfaktor, eine hohe Resistenz gegen Erschütterungen und Stöße, ein hoher Korrosionsschutz, außerdem eine größere Reichweite der Vorrichtung aufgrund des Wegfalls von Luft- oder Wasserzuführungen, eine hohe Lebensdauer aufgrund der kompakten Bauweise, sowie eine gleichmäßige und verbesserte Kühlung der Hochleistungsdioden, sowie weitere im Ausführungsbeispiel näher ausgeführter Vorteile.

Die Erfindung soll anhand eines Ausführungsbeispiels näher erläutert werden. In den zugehörigen Zeichnungen zeigen:
- Fig. 1: eine Gesamtansicht einer Vorrichtung,
- Fig. 2: einen Schnitt A - A durch die Vorrichtung nach Fig. 1,
- Fig. 3: ein Beispiel für einen einseitig mit Hochleistungs-Leuchtdioden 9 bestückte Isolierstoffträger 8,
- Fig. 4: ein weiteres Beispiel für eine Bestückung mit Hochleistungs-Leuchtdioden 9,
- Fig. 5: ein Beispiel eines Einsatzes, dessen Platinen doppelseitig mit Hochleistungs-Leuchtdioden 9 bestückt sind,
- Fig. 6: ein Beispiel einer Vorrichtung in kugelähnlicher Ausführung mit bauchig angeordneten Isolierstoffträgern 8, die einseitig bestückt sind und
- Fig. 7: ein Beispiel einer Vorrichtung mit einem angedockten Flüssigkeitsspeicher19

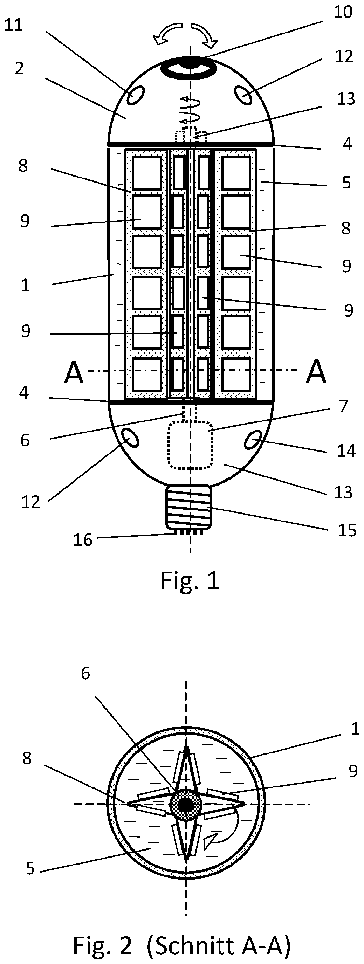

Gemäß der Fig. 1 besitzt die Vorrichtung ein vorzugsweise im Querschnitt kreisrundes, längliches Kopfteil 1 aus einem wärmebeständigen, transparenten Material, beispielsweise Glas oder geeigneten Kunststoff, dessen offene Enden mit zwei Endkappen 2, 3 aus VA-Material oder Aluminium fluiddicht abschließen. Zur Verbesserung der Dichtheit können Dichtelemente 4 zwischen den Rändern des Kopfteils 1 und den Endkappen 2, 3 vorgesehen sein. Das Kopfteil 1 und die beiden Endkappen 2, 3 bilden folglich ein nach außen dichtes Gefäß. Die Vorrichtung ist mit einer transparenten, wärmebeständigen Kühl- und Isolierflüssigkeit 5 gefüllt. Als Isolierflüssigkeiten 5 eignen sich beispielsweise Transformatorenöle, Kondensatoröle, sonstige geeignete Mineralöle oder organische Ester.

Die Isolierflüssigkeit 5 füllt die gesamte Vorrichtung aus, jedoch kann nach einer speziellen Ausprägung der Erfindung auch vorgesehen sein, dass lediglich das Kopfteil 1 gefüllt ist oder das Kopfteil 1 und nur eine der Endkappen 2, 3. Die andere oder beide Endkappen 2, 3 sind in einem solchen Fall durch eine Trennwand (nicht dargestellt) vom Kopfteil 1 abgeschottet. Im Inneren der Vorrichtung ist ein Einsatz gelagert, dessen Welle 6 von einem Elektro-Motor 7 stufenlos kontinuierlich oder getaktet in beiden Drehrichtungen angetrieben werden kann. Die Drehrichtung und Drehgeschwindigkeit der Welle 6 kann automatisch gesteuert werden, so dass sich das Drehmoment des Einsatzes geregelt oder automatisch verändert lässt. Nach einer speziellen Variante der Erfindung entfällt der Motorantrieb und die Welle 6 ruht oder der Einsatz wird infolge einer speziellen Wendelform (nicht dargestellt) allein durch die bewegte Isolierflüssigkeit 5 angetrieben oder wird durch ein Umpumpen der Isolierflüssigkeit bewegt.

Der Einsatz trägt im Bereich des Kopfteils 1 im Wesentlichen radial abstehende und mit Leiterzügen versehene Isolierstoffträger 8, auf welche vorzugsweise Hochleistungs-Leuchtdioden (H-LED) 9 in Oberflächen-montierbarer Bauweise (H-SMD-LED) aufgebracht sind. Die Hochleistungs-Leuchtdioden 9 können vorteilhaft durch direktes Drahtbonden des Hochleistungs-Leuchtdioden-Chips (H-COB-LED) und Vergießen auf den Isolierstoffträgern 8 aufgebracht werden. Oder aber es werden mit "Pins" versehene und einen Reflektor aufweisende Leuchtdioden mit einem transparenten Kunststoffgehäuse verwendet. Als Isolierstoffträger 8 kommen sowohl Leiterplatten als auch Leiterfolien in Betracht. Die Wellenlänge der Leuchtdioden 9 ist auf das zu härtende Harz, mit denen der Auskleidungs- d. h. Faserschlauch getränkt ist, abgestimmt. Es können sowohl UV-emittierende Dioden mit z. B. 420 nm Wellenlänge als auch IR-emittierende Hochleistungs-Dioden eingesetzt sein.

In beide Endkappe 2, 3 sind - neben dem optional vorgesehenen E-Motor 7 in der hinteren Endkappe 3 - weitere Funktionselemente der Vorrichtung untergebracht. So verfügt die vordere Endkappe 2 über eine steuerbare Videokamera 10, einen Sensor 11 zur Erfassung der Lufttemperatur, einen IR-Sensor 12 zur Erfassung der Reaktionstemperatur der Auskleidung und ein Wellenendlager 13 für das Wellenende der Welle 6. In der hinteren Endkappe 3 befindet sich ein weiterer IR-Sensor 12 zur Erfassung der Temperatur der Auskleidung, ein Drucksensor 14 zur Erfassung des Luftdrucks innerhalb der endseitig verschlossenen Auskleidung und optional eine zweite Videokamera. Weiterhin kann ein Temperatursensor zur Erfassung der Temperatur der Isolierflüssigkeit 5 innerhalb der Vorrichtung vorgesehen sein. An die Endkappe 3 ist eine Verschraubung 15 mit integriertem E-Stecker 16 montiert, an welche ein geeignetes Elektrokabel oder steiferes Schiebekabel 21 angeschlossen werden kann. Über dieses Kabel werden der E-Motor 7 der Vorrichtung, die Videokamera 10 und die Hochleistungs-Leuchtdioden 9 mit Energie versorgt und gesteuert/geregelt, die Sensorelektronik gespeist und die Daten der Sensoren 11, 12, 14 an einen zentralen externen Computer-gestützten Arbeitsplatz weitergeleitet.

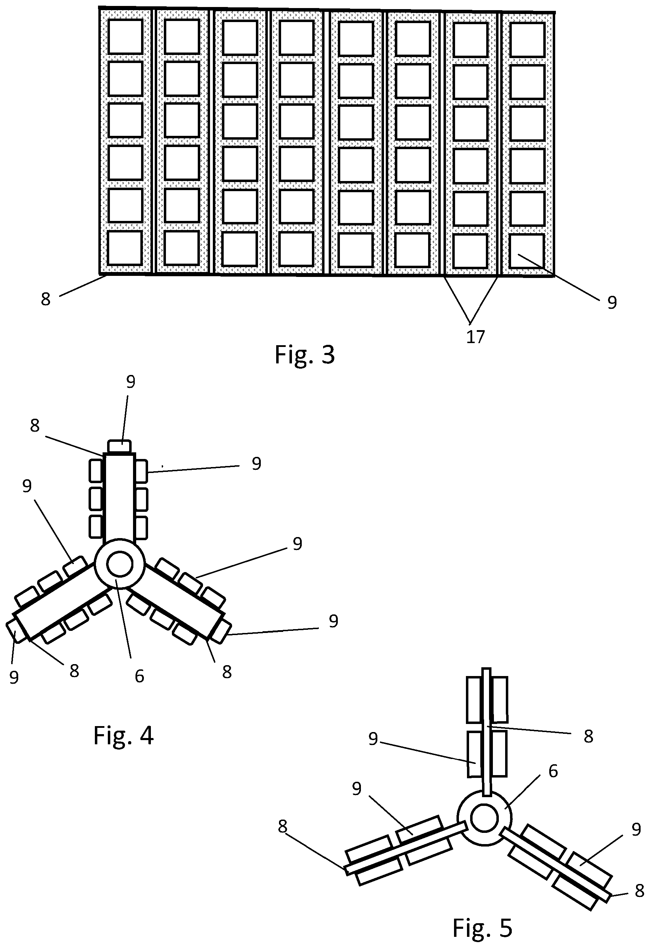

Gemäß der Fig. 1 in Verbindung mit Fig. 2 und Fig. 3 trägt die Welle 6 des Einsatzes einen Leucht-Stern aus einen mit Hochleistungs-Leuchtdioden 9 bestückten Isolierstoffträger 5. Im Beispiel besteht der Isolierstoffträger 5 aus über Scharnierzonen 17 elektrisch und mechanisch verbundenen Einzel-Leiterplatten, auf welche jeweils 6 Hochleistungs-COB-LED im ebenen Zustand des Isolierstoffträgers 5 einseitig gebondet sind. Die sternförmige Faltstruktur im auf der Welle 6 montierten Zustand geht besonders gut aus Fig. 2 hervor, die einen Schnitt A-A durch die Vorrichtung gemäß Fig. 1 zeigt. Der Einsatz mit den Hochleistungs-Leuchtdioden 9 auf den Außenflächen des Isolierstoffträgers 5 wird innerhalb des Kopfteils 1 mit einer transparenten, wärmefesten Isolierflüssigkeit 5 umspült. Der Spülvorgang und damit die Kühlung der Hochleistungs-Leuchtdioden 9 kann verstärkt werden, wenn der Einsatz durch einen Motor 7, speziell einen regelbaren E-Motor mit R-L-Lauf, angetrieben wird. Der Einsatz kann aber auch schraubenförmig ausgebildet sein und sich dann allein vermittels der Umspülung mit Isolierflüssigkeit 5 oder durch Umpumpen der Isolierflüssigkeit 5 drehen.

Fig. 4 zeigt einen Querschnitt durch einen weiteren Einsatz. Die feststehende Achse oder drehende Welle 6 des Einsatzes ist mit einer zu einem Stern gefalteten Isolierstofffolie oder aus zusammengesetzten Isolierstoffplatten versehen, welche die Isolierstoffträger 8 für umfänglich verteilte Hochleistungs-Leuchtdioden 9 bilden.

In der Fig. 5 wird eine erste Abwandlung innerhalb des Erfindungsgedankens vorgestellt, bei der einzelne Leiterplatinen als Isolierstoffträger 8 doppelseitig mit Hochleistungs-Leuchtdioden 9 bestückt sind. Die Isolierstoffplatinen sind vorteilhaft direkt in die Welle 6 eines Einsatzes eingesteckt. Im Beispiel sind drei sternförmig abgehende Platinen dargestellt, es können aber auch zwei, vier oder mehr sein.

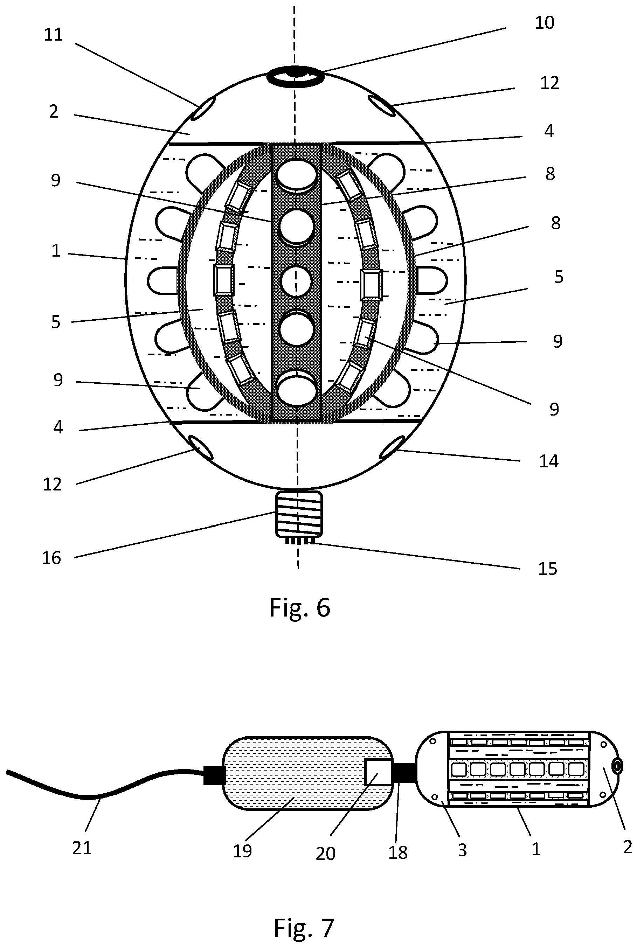

Die Figur 6 zeigt die Ansicht einer eiförmigen Vorrichtung (diese kann aber auch kugelförmigen sein), bei der das Kopfteil 1 bauchig, aber rotationssymmetrisch geformt ist und mit den Endkappen 2, 3 mittels Dichtelementen 4 abschließt. Die Endkappen 2, 3 nehmen wiederum Sensoren 10, 11, 12, 14 auf und sind, wie auch das Kopfteil 1, mit einer Kühl- und Isolierflüssigkeit 5 gefüllt. Der Einsatz trägt mehrere Isolierstoffträger 8, im Beispiel acht, die vergleichbar mit Fass-Dauben, sich umfänglich um die Welle 6 des Einsatzes wölben. Im Beispiel tragen die Isolierstoffträger 8 Hochleistungs-Leuchtdioden 9 unterschiedlicher Leistung/Lichtstärke, beispielsweise von der Mitte nach außen zunehmend von 10 W bis 30 W und/oder unterschiedlich emittierender Wellenlängen und/oder unterschiedlicher Bauart, um insbesondere zu erreichen, dass der Faserschlauch trotz der Eiform oder Kugelform der Vorrichtung gleichmäßig bestrahlt wird.

Der Einsatz kann feststehend sein oder sich axial um eine Welle (nicht sichtbar) elektromotorisch drehen. Alternativ kann der Einsatz vermittels einer sich umwälzenden Isolierflüssigkeit drehen, entweder allein durch die Eigenwärmeentwicklung der Isolierflüssigkeit 5 oder durch Umpumpen innerhalb der Vorrichtung. Hierzu ist der Einsatz vorzugsweise schraubenförmig gestaltet.

Es versteht sich, dass das Kopfteil 1 im Querschnitt nicht kreisrund sein muss, sondern ebenso vieleckig, wie 6- oder 8-eckig sein kann und über seine Längsachse gerade, bauchig oder tailliert. Entsprechend sind die Einsätze geformt.

Die einzelnen Hochleistungs-Leuchtdioden 9 sind, wie auch in Fig. 1, jeweils in Variationen aus Reihen- und/oder Parallelschaltungen über Kabelzuführungen mit dem E-Stecker 16 verbunden. Das Kabel zu den elektrischen Komponenten in der vorderen Endkappe 2 führt von dem E-Stecker 16 durch die Welle 6, hier als eine Hohlwelle ausgebildet. Die Leistung einer Vorrichtung kann erstmals vorzugsweise bis auf 1000 W/m² ausgelegt sein, wobei die Leistung stufenweise oder kontinuierlich auf z. B. 800 W, 600 W oder 400 W je nach Bedarf heruntergefahren werden kann, beispielsweise in Abhängigkeit der Durchlaufgeschwindigkeit, der Nennweite des Rohrs und den Eigenschaften der Auskleidung, also des geharzten Faserschlauchs. Der Faserschlauch sollte während des Härtens nicht über 180°C beansprucht werden, um Schäden durch ein Verkohlen oder Verbrennen zu vermeiden. Letztlich stellt die Fig. 7 eine erweiterte Variante vor, die darin besteht, dass an die Vorrichtung 1 ein über eine Kupplung 18 ein Flüssigkeitsspeicher 19 mit einer in diesem oder an diesem angeordneten Pumpe 20 angedockt ist, um die Isolierflüssigkeit 5 umzupumpen zu können und damit eine verbesserte Kühlung der Isolierflüssigkeit 5 erreichen zu können. Es können auch mehrere weitere Flüssigkeitsspeicher 19 als eine Art Zusatzkühler angeordnet werden. Die Flüssigkeitsspeicher 19 können zusätzlich noch mit Kühlrippen versehen sein um die Wärme aus der Isolierflüssigkeit an die Luft im Rohr besser ableiten zu können. Die Isolierflüssigkeit 5 kühlt hier also besonders gut die Hochleistungsdioden 9. Das hat den Vorteil, dass die Aushärtung mit sehr hoher Leistung erfolgen kann ohne dass die Hochleistungs-Leuchtdioden 9 überhitzen können, da die Wärme durch das Umpumpen aus dem Kopfteil optimal abgeführt wird. Als weiterer Vorteil ergibt sich, dass durch die Strömung der Isolierflüssigkeit 5 bei einer entsprechenden Gestaltung des Einsatzes dieser auch ohne E-Motorantrieb um eine Welle kraftvoll dreht, was eine sehr gleichmäßige Bestrahlung und damit Aushärtung des Faserschlauchs bewirkt. An das hintere Ende des Flüssigkeitsspeichers 19 ist ein flexibles oder steifes Versorgungskabel 21 angeschlossen welches auch als Schiebekabel 21 ausgebildet sein kann.

Die beschriebene Vorrichtung ist Teil eines Gesamtsystems aus:
1. Steuereinheit
   1.1 Elektrisch Steuerung/Regelung mit PC, Monitor und Tastatur
   1.2 Elektrische Steuerung/Regelung der Hochleistungs-Leuchtdioden
2. Haspel mit E-Antrieb und einem flexiblen Kabel oder Schiebekabel
   2.1. Elektromechanisches Geschwindigkeits-Control-System
   2.2 Haspelgestell mit Rollen
3. Hochleistungs-Leuchtdioden-Vorrichtung mit IR-Faserschlauch-Temperaturmessung, IR-Lufttemperaturmessung, Luftdruckmessung, TV-Kamera, Leuchtdioden-Strahlstern.

Die Lineargeschwindigkeit der Vorrichtung wird in einem "Heiz-Modus" regelungstechnisch überwacht und nach Vorgaben des Herstellers der Auskleidung gefahren. Die Aufrollfunktion des Systems erfolgt automatisch.

Durch das vollständige Ölbad aller mechanischen und elektrischen/ elektronischen/ optoelektronischen Komponenten im Falle der zu bevorzugenden Füllung der Gesamtvorrichtung in einer Isolierflüssigkeit 5, also des Kopfteils 1 einschließlich beider Endkappen 2, 3 ergeben sich zusammenfassend folgende Vorteile:
- sehr schnelle gesteuerte Inliner (Faserschlauch) Aushärtung durch hohe Strahlungsleistung
- hervorragende Isolationswerte zwischen den Hochleistungs-Leuchtdioden und zu den sonstigen Bauteilen
- ausgezeichneter Schutz der Bauteile gegen Korrosion und Kurzschluss
- ausgezeichneter Schutz vor Überhitzung einzelner Hochleistungs-Leuchtdioden und deren Baugruppen infolge einer effektiven Wärmeableitung über die Isolierflüssigkeit
- Nutzung der Vorrichtung unter höheren Temperaturen als üblich und somit ein schnelleres Stabilisieren des Auskleidungsschlauchs
- verbesserter mechanischer Schutz aller Komponenten gegen äußere Einwirkungen, wie Stöße
- Vermeidung von partiellen Temperaturspitzen, die den Wirkungsgrad und Lebensdauer der Hochleistungs-Leuchtdioden negativ beeinflussen
- zusätzliche Verbesserung der Kühlung bei motorischem Drehantrieb des Einsatzes
- Möglichkeit der Schaffung eines Drehantriebs allein durch die Isolierflüssigkeit
- kein Nachschleppen von Kühlleitungen infolge eines geschlossenen Kühlsystems.

Aufstellung der verwendeten Bezugszeichen:
- 1: Kopfteil
- 2: vordere Endkappe
- 3: hintere Endkappe
- 4: Dichtelement
- 5: Isolierflüssigkeit
- 6: Welle oder Hydraulikleitung
- 7: Motor, Elektro- oder Hydraulikmotor
- 8: Isolierstoffträger
- 9: Hochleistungs-Leuchtdiode
- 10: Videokamera
- 11: Lufttemperatur-Sensor
- 12: IR-Sensor
- 13: Wellenendlager
- 14: Luftdrucksensor
- 15: Verschraubung oder Kupplung
- 16: E-Stecker
- 17: Scharnierzone
- 18: Kupplungsstück
- 19: Flüssigkeitsspeicher
- 20: Pumpe
- 21: Kabel

## Patentansprüche

1. Vorrichtung zum Sanieren einer Rohrleitung mittels eines Auskleide-Faserschlauchs, der mit einem Reaktionsharz getränkt ist, welches unter dem Einfluss lichtemittierender Bauelemente aushärtet, wobei die Vorrichtung ein Kopfteil (1) aus einem transparenten, temperaturbeständigen Material besitzt, die gesamte Vorrichtung oder zumindest ihr Kopfteil (1) mit einer transparenten, schwer entflammbaren Isolierflüssigkeit (5) gefüllt ist
wobei Endkappen (2, 3) an beiden Stirnseiten die Vorrichtung nach außen hermetisch abdichten,
wobei die Vorrichtung einen Einsatz aufnimmt, auf dessen Isolierstoffträger (8) Hochleistungs-Leuchtdioden (9) angeordnet sind und
wobei der Einsatz in Längsachse der Vorrichtung rotationssymmetrisch ist und motorisch über eine Welle oder eine Hydraulikleitung (6) antreibbar ist.

2. Vorrichtung nach Anspruch 1,
**dadurch gekennzeichnet,**
**dass** der Einsatz radial, sternförmig oder bauchig abstehende und mit Leiterzügen versehene Isolierstoffträger (8) aufweist, die im Bereich des Kopfteils (1) mit Hochleistungs-Leuchtdioden (9) bestückt sind.

3. Vorrichtung nach Anspruch 1 oder 2,
**gekennzeichnet dadurch,**
**dass** der Einsatz ein oder mehrere Flügel, oder Bögen aus ein- oder beidseitig bestückten Isolierstoffträgern (8) trägt.

4. Vorrichtung nach Anspruch 2,
**dadurch gekennzeichnet,**
**dass** der Einsatz sternförmig aus drei bis sechs, vorzugweise vier, beidseitig bestückten Isolierstoffträgern (8) ausgebildet ist.

5. Vorrichtung nach Anspruch 1,
**dadurch gekennzeichnet,**
**dass** ein im ebenen Zustand einseitig bestückter Isolierstoffträger (8) Faltzonen aufweist und im montierten Zustand ein radial abstehendes, sternförmiges Gebilde mit äußerlich angeordneten Hochleistungs-Leuchtdioden (9) ausformt.

6. Vorrichtung nach einem der vorstehenden Ansprüche,
**dadurch gekennzeichnet,**
**dass** in einer der Endkappen (2, 3) ein regelbarer E-Motor (7) für einen Antrieb der Welle (6) angeordnet ist.

7. Vorrichtung nach einem der vorstehenden Ansprüche,
**dadurch gekennzeichnet,**
**dass** in und/oder an mindestens der stirnseitigen Endkappe (2) eine schwenkbare Videokamera (10) angeordnet ist.

8. Vorrichtung nach einem der vorstehenden Ansprüche,
**dadurch gekennzeichnet,**
**dass** in beiden Endkappen (2, 3) Sensoren (11, 12, 14) angeordnet sind, welche mindestens die Reaktionstemperatur am oder im Faserschlauch, die Lufttemperatur im Rohr, die Temperatur der Isolierflüssigkeit (5) und die Druckluft im Rohr während des Härtevorgangs erfassen und an eine externe zentrale Steuerung/Regelung melden.

9. Vorrichtung nach einem der vorstehenden Ansprüche,
**dadurch gekennzeichnet,**
**dass** die hintere Endkappe (3) einen kombiniert mechanisch-elektrischen Anschluss (15, 16) zu einem flexiblen Kabel oder Schiebekabel aufweist, über welchen der E-Motor (7) die Videokamera (10), die lichtemittierenden Hochleistungsdioden (9) und die Sensoren (11, 12, 14) beaufschlagt werden,
oder ein hydraulisch-elektrischer Anschluss (15, 16) zu einer flexiblen oder Schiebehydraulikleitung aufweist, wobei die Zuleitungen zu der stirnseitigen Endkappe (2) durch die hohle Welle oder Hydraulikleitung (6) hindurchgeführt sind.

10. Vorrichtung nach einem der vorstehenden Ansprüche,
**dadurch gekennzeichnet,**
**dass** das Kopfteil (1) und nur eine der Endkappen (2 oder 3) der Vorrichtung mit Isolierflüssigkeit (5) gefüllt sind.

11. Vorrichtung nach einem der vorstehenden Ansprüche,
**dadurch gekennzeichnet,**
**dass** als Isolierflüssigkeit (5) ein Mineralöl oder ein organischer Ester dient.

12. Vorrichtung nach einem der vorstehenden Ansprüche,
**dadurch gekennzeichnet,**
**dass** die Hochleistungs-Leuchtdioden (9) durch die Wahl ihrer Wellenlänge geeignet sind das Reaktionsharz im Faserschlauch zu härten.

13. Vorrichtung nach einem der vorstehenden Ansprüche,
**dadurch gekennzeichnet,**
**dass** die Hochleistungs-Leuchtdioden (9) über ihre Erstreckung in unterschiedlicher Wellenlänge und/oder unterschiedlicher Lichtstärke strahlen.

14. Vorrichtung nach einem der vorstehenden Ansprüche,
**dadurch gekennzeichnet,**
**dass** das Kopfteil (1) im Querschnitt rotationssymmetrisch, zylindrisch, vieleckig oder bauchig ausgebildet ist über seine Längsseite gerade, bauchig oder tailliert ist.

15. Vorrichtung nach einem der vorstehenden Ansprüche,
**dadurch gekennzeichnet,**
**dass** mit dem Kopfteil (1) ein oder mehrere nach geordnete Flüssigkeitsspeicher (19) zum Umpumpen der Isolierflüssigkeit (5) verbunden sind.

16. Vorrichtung nach einem der vorstehenden Ansprüche,
**dadurch gekennzeichnet,**
**dass** der Einsatz schraubenförmig ausgebildet ist und durch die Strömung der Isolierflüssigkeit (5) angetrieben ist.

## Claims

1. A device for restoring a pipeline by means of a fibre lining hose impregnated with a reactive resin which cures under the influence of light-emitting devices, wherein the device has a head part (1) made of a transparent, temperature-resistant material, the whole device or at least its head part (1) being filled with a transparent, flame-retardant insulation liquid (5),
wherein end caps (2, 3) on both end sides hermetically seal the device towards the outside,
wherein the device accommodates an insert, on the insulating material carrier (8) of which high-power light-emitting diodes (9) are arranged, and
wherein the insert is rotationally symmetrical along the longitudinal axis of the device and can be motor-driven via a shaft or a hydraulic line (6).

2. The device according to claim 1,
**characterized in that**
the insert has insulating material carriers (8) projecting radially, in a star shape or bulging and provided with conductor tracks, which carriers are populated with high-power light-emitting diodes (9) in the area of the head part (1).

3. The device according to claim 1 or 2,
**characterized in that**
the insert carries one or more wings or arches of insulating material carriers (8) populated on one or both sides.

4. The device according to claim 2,
**characterized in that**
the insert is designed in a star shape of three to six, preferably four, insulating material carriers (8) populated on both sides.

5. The device according to claim 1,
**characterized in that**
an insulating material carrier (8) populated on one side has folding zones in the flat state and forms a radially projecting, star-shaped structure with externally arranged high-power light-emitting diodes (9) in the mounted state.

6. The device according to any of the preceding claims,
**characterized in that**
a controllable electric motor (7) for driving the shaft (6) is arranged in one of the end caps (2, 3).

7. The device according to any of the preceding claims,
**characterized in that**
a pivotable video camera (10) is arranged in and/or on at least the front-sided end cap (2).

8. The device according to any of the preceding claims,
**characterized in that**
sensors (11, 12, 14) are arranged in both end caps (2, 3), which sensors detect and communicate to an external central controller at least the reaction temperature on or in the fibre hose, the air temperature in the pipe, the temperature of the insulating liquid (5) and the compressed air in the pipe during the curing process.

9. The device according to any of the preceding claims,
**characterized in that**
the rear end cap (3) has a combined mechanical-electrical connector (15, 16) to a flexible cable or pushrod cable, which connector is used to supply the electric motor (7), the video camera (10), the light-emitting high-power diodes (9) and the sensors (11, 12, 14),
or a hydraulic-electrical connector (15, 16) to a flexible or sliding hydraulic line, the supply lines to the front-sided end cap (2) being guided through the hollow shaft or hydraulic line (6).

10. The device according to any of the preceding claims,
**characterized in that**
the head part (1) and only one of the end caps (2 or 3) of the device are filled with insulating liquid (5).

11. The device according to any of the preceding claims,
**characterized in that**
the insulating liquid (5) is a mineral oil or an organic ester.

12. The device according to any of the preceding claims,
**characterized in that**
the high-power light-emitting diodes (9) as a result of their selected wavelength are adapted to cure the reactive resin in the fibre hose.

13. The device according to any of the preceding claims,
**characterized in that**
the high-power light-emitting diodes (9) radiate at different wavelengths and/or different light intensities over their extension.

14. The device according to any of the preceding claims,
**characterized in that**
the head part (1) is designed with a rotationally symmetrical, cylindrical, polygonal or bulging cross section and is straight, bulging or constricted along its long side.

15. The device according to any of the preceding claims,
**characterized in that**
one or more liquid reservoirs (19) are arranged behind and connected with the head part (1) to recirculate the insulating liquid (5).

16. The device according to any of the preceding claims,
**characterized in that**
the insert is designed in a helical shape and is driven by the flow of the insulating liquid (5).

## Revendications

1. Dispositif destiné à la rénovation d'une canalisation au moyen d'un tuyau fibreux de revêtement imprégné d'une résine réactive durcissant sous l'influence d'éléments émetteurs de lumière, le dispositif étant pourvu d'une partie de tête (1) fabriquée dans un matériau transparent et résistant à la température, le dispositif entier, ou au moins sa partie de tête (1), étant rempli(e) d'un liquide isolant (5) transparent et difficilement inflammable,
des couvercles d'extrémité (2, 3) scellant le dispositif hermétiquement vers l'extérieur aux deux extrémités,
le dispositif accueillant un insert sur le support en matériau isolant (8) duquel sont disposés des diodes électroluminescentes haute-puissance (9) et
l'insert, présentant une symétrique de révolution selon l'axe de sa longueur, pouvant être entraîné par un moteur par l'intermédiaire d'un arbre ou d'une conduite hydraulique (6).

2. Dispositif selon la revendication 1,
**caractérisé en ce que** :
l'insert présente des supports en matériau isolant (8) faisant saillie radialement, en forme d'étoile ou de façon bombée et qui sont garnis de diodes électroluminescentes haute-puissance (9) dans la région de la partie de tête (1).

3. Dispositif selon la revendication 1 ou 2,
**caractérisée en ce que** :
l'insert porte un ou plusieurs panneaux ou arches de supports en matériau isolant (8) et garnis d'un ou des deux côtés.

4. Dispositif selon la revendication 2,
**caractérisé en ce que** :
l'insert est réalisé en forme d'étoile de trois à six, préférablement de quatre, supports d'un matériau isolant (8) garnis des deux côtés.

5. Dispositif selon la revendication 1,
**caractérisé en ce que** :
un support d'un matériau isolant (8) garni d'un côté présente à l'état plat des zones de pliage et forme, à l'état monté, une structure en forme d'étoile faisant saillie radialement et présentant des diodes électroluminescentes haut-puissance (9) disposées à l'extérieur.

6. Dispositif selon une des revendications précédentes,
**caractérisé en ce que** :
un moteur électrique (7) réglable est disposé dans l'un des couvercles d'extrémité (2, 3) afin d'entraîner l'arbre (6).

7. Dispositif selon une des revendications précédentes,
**caractérisé en ce que** :
une caméra vidéo (10) pivotable est disposée dans et/ou sur au moins le couvercle d'extrémité (2) du côté frontal.

8. Dispositif selon une des revendications précédentes,
**caractérisé en ce que** :
dans les deux couvercles d'extrémité (2, 3) sont disposés des capteurs (11, 12, 14) qui saisissent et signalent à une unité de commande/de régulation centrale externe au moins la température de réaction sur ou dans le tuyau fibreux, la température de l'air dans la canalisation, la température du liquide isolant (5) et l'air comprimé dans la canalisation pendant le durcissement.

9. Dispositif selon une des revendications précédentes,
**caractérisé en ce que** :
le couvercle d'extrémité (3) arrière présente un port (15, 16) mécano-électrique vers un câble flexible ou un câble de poussée, par l'intermédiaire duquel sont alimentés le moteur électrique (7), la caméra vidéo (10), les diodes électroluminescentes (9) et les capteurs (11, 12, 14),
ou un port (15, 16) hydraulique-électrique vers une conduite hydraulique flexible ou de poussée, les conduites d'amenée au couvercle d'extrémité (2) du côté frontal étant guidées à travers l'arbre creux ou la conduite hydraulique (6).

10. Dispositif selon une des revendications précédentes,
**caractérisé en ce que** :
la partie de tête (1) et seulement un des couvercles d'extrémité (2 ou 3) du dispositif sont remplis de liquide isolant (5).

11. Dispositif selon une des revendications précédentes,
**caractérisé en ce que** :
une huile minérale ou un ester organique sert de liquide isolant (5).

12. Dispositif selon une des revendications précédentes,
**caractérisé en ce que** :
les diodes électroluminescentes haute-puissance (9) sont aptes à durcir la résine réactive dans le tuyau fibreux par voie de sélection de leur longueur d'onde.

13. Dispositif selon une des revendications précédentes,
**caractérisé en ce que** :
les diodes électroluminescentes haute-puissance (9) rayonnent à une longueur d'onde différente et/ou une intensité de lumière différente sur leur étendue.

14. Dispositif selon une des revendications précédentes,
**caractérisé en ce que** :
la partie de tête (1) est réalisée selon une section transversale symétrique de révolution, cylindrique, polygonale ou bombée et est droite, bombée ou cintrée sur son côté longitudinal.

15. Dispositif selon une des revendications précédentes,
**caractérisé en ce que** :
un ou plusieurs réservoirs de liquide (19) sont reliés à la partie de tête (1) à l'arrière de celle-ci afin de faire recirculer le liquide isolant (5).

16. Dispositif selon une des revendications précédentes,
**caractérisé en ce que** :
l'insert est réalisé en forme d'hélice et se voit actionné par l'écoulement du liquide isolant (5).
